# EUROPEAN PATENT APPLICATION

(11) **EP 1 655 631 A1**
(43) Date of publication of application: **10.05.2006**
(21) Application number: 04747915.9
(22) Date of filing: 16.07.2004
(51) Int. Cl.: G02F 1/13, G02F 1/1368, G01R 31/00

(54) **INSPECTION METHOD, SEMICONDUCTOR DEVICE, AND DISPLAY DEVICE**

(30) Priority: 22.07.2003 JP 2003277603
(71) Applicant: SONY CORPORATION, Tokyo 141-0001 (JP)
(72) Inventor: ANDO, Naoki, Tokyo 141-0001 (JP)
(74) Representative: Mills, Julia
(86) International application number: PCT/JP2004/010552
(87) International publication number: WO 2005/008318

(57) **Abstract**

The present invention allows an efficient test as to the presence of line defects in data lines and gate lines in a liquid crystal display. A logic circuit for a test is provided according to the interconnect layout structure on a semiconductor substrate of a liquid crystal display, and ends of data lines are coupled to inputs of the logic circuit. At the time of the test, test drive signals corresponding to a certain logical value are applied to the data lines, and a determination is made as to defects in the data lines based on the output from the logic circuit, obtained in response to the signal application. This way means that determinations can be made as to defects in the data lines based on a logical value as the output from the logic circuit, i.e., binary values. Such a configuration is also applied to gate lines.

## Description

### Technical Field

The present invention relates to a test method for a semiconductor substrate in which pixel drive cells are arranged in a matrix, a semiconductor device including a semiconductor substrate that is compatible with this test method, and a display apparatus including such a semiconductor device.

### Background Art

Liquid crystal displays employing an active matrix method have been widely used for liquid crystal projector devices, liquid crystal display devices, and so on.

As is well known, such active matrix liquid crystal displays are formed by arranging in a matrix on a semiconductor substrate for example, pixel cell drive circuits each including a pixel switch constructed of e.g. a MOS transistor and a pixel capacitor coupled to the pixel switch.

Specifically, a plurality of scan lines (gate lines) are disposed along the horizontal (row) direction while a plurality of data lines are disposed along the vertical (column) direction. The pixel cell drive circuits are coupled to the positions corresponding to the intersections between these gate lines and data lines. In addition, a counter substrate having thereon a common electrode is disposed to face the semiconductor substrate, and a liquid crystal is enclosed between the semiconductor substrate and counter substrate. A liquid crystal display is formed with having the above structure.

Simple description will be made below about driving of such a liquid crystal display for displaying images.

To the gate lines disposed along the horizontal direction, voltage of a certain level is sequentially applied on one horizontal scan period basis for example. That is, the gate lines are sequentially scanned. At this time, gate voltage is applied to the gates of plural pixel switches (MOS transistors) coupled to the scanned gate line, and thus these pixel switches enter the on-state. In step with this, the data lines are driven in one horizontal scan period. That is, voltages depending on data are applied to the data lines. In this voltage application, typically, data is sequentially applied to the data lines, i.e., the data lines are driven by a so-called dot-sequential driving method.

The data thus applied is accumulated as charges in the pixel capacitors via the pixel switches that have been turned on as described above. That is, data is written to the pixel cells of one horizontal line. When data is thus written, a potential difference arises between the charges accumulated in the pixel capacitor and common voltage applied to the counter electrode. This potential difference excites the liquid crystal enclosed between the pixel capacitor and the counter electrode. That is, driving of the pixel cells is carried out.

Such driving of the pixel cells corresponding to one gate line is executed every time a respective one of the gate lines is sequentially scanned, which results in displaying of an image of one screen for example.

Typically display driving of a liquid crystal display is implemented in such a manner to avoid the deterioration of the liquid crystal due to application of DC voltage thereto. As one of AC driving methods for avoiding the deterioration, polarity inversion driving is known in which pixel data is inverted between the positive side and negative side based on a common voltage. Examples of methods employing different timing of the polarity inversion include a frame inversion method for inverting polarity on a frame basis, a line inversion method for inverting on a horizontal line basis, and a dot inversion method for inverting on a pixel cell (dot) basis.

In the fabrication process of a semiconductor substrate included in a liquid crystal display having the above-described structure, there is a case in which circuit defects are caused in gate lines and data lines. Specifically, there is a possibility that gate lines and data lines that do not normally work exist due to disconnection thereof, and short-circuit thereof with another interconnect on the semiconductor substrate. Such defects are also referred to as a line defect. Depending on the line defect, a serious quality trouble for a liquid crystal display, e.g., existence of a linear non-displaying part, may be caused.

Therefore, in the fabrication process of a liquid crystal display, the existence of line defects is tested for circuits on the semiconductor substrate.

This test as to line defects of a semiconductor substrate circuit is carried out as follows for example.

Specifically, provided for the semiconductor substrate circuit are pads electrically coupled to ends of the gate lines and data lines. Subsequently, while voltage of a certain level is applied to the gate lines and data lines to be tested, a probe needle is directly brought into contact with the pads described above and the detected current is observed. The level of the detected current changes depending on the states of the gate lines and data lines, such as the presence or absence of line defects. Thus, a determination can be made as to whether line defects are present or absent.

In recent years, however, in consideration of adoption to a projector device for example, there have been increasing requirements for miniaturization of a liquid crystal display and increase of the number of pixels per unit area for enhancing the resolution. This miniaturization and pixel number increase however may lead to a small distance between adjacent gate lines and data lines. Accordingly, it is difficult to ensure on a semiconductor substrate a space for disposing pads corresponding to the respective gate lines and data lines, which also problematically makes it difficult to actually implement the above-described test.

Therefore, a method is disclosed in Patent Document 1 (Japanese Patent Laid-open No. 2001-201765) for example. In this method, ends of e.g. data lines, not coupled to a drive circuit, are connected in common into one end, followed by being coupled to an input/output terminal. Between the input/output terminal and terminals for supplying video signals, voltage of a certain level is applied from the external. The level of a current flowing through the terminal due to the voltage application is then observed to thereby determine the presence of line defects.

However, according to the invention disclosed in Patent Document 1, the current level is measured as an analog value. If the determination is thus premised on current level measurement based on analogue values, measurement errors due to the indication by analog values must be considered in order to accurately make a determination as to line defects and the like based on the measured current level. Accordingly, the test time period for measuring current levels is long, which causes a problem that it is difficult to efficiently progress the test operation.

In order to shorten the test time period, it may be available for example to detect the current level of all data lines and gate lines collectively. In this case, however, if disconnection or short-circuit exists in only one line for example of the collected data lines and gate lines, the current level change reflecting the line defect is significantly small. As a result, depending on a current level, it is difficult to accurately obtain a determination result about line defects. Therefore, eventually, the data lines and gate lines must be driven by sequential voltage application for example. As described above, under the present circumstances, it is required to more efficiently implement a test for line defects on a semiconductor substrate of a liquid crystal display or the like.

### Disclosure of Invention

In consideration of the above-described problems, one aspect of the present invention provides the following method as a test method for a semiconductor substrate in which pixel cell drive circuits each including a pixel switch and a pixel capacitor that is coupled to the pixel switch and holds pixel data are arranged in a matrix corresponding to intersections between data lines and pixel switch control lines.

Specifically, the method includes a test drive step of selecting two or more data lines or two or more pixel switch control lines according to an interconnect layout structure on the semiconductor substrate and/or a test item, and applying to each of the selected data lines or each of the selected pixel switch control lines a test drive signal having a level that corresponds to a required logical value and is set according to the operation expression of logical operation executed in a logical operation step, and a logical operation step of inputting as a logical value an output of a potential arising in each of the selected two or more data lines or each of the selected two or more pixel switch control lines, and executing logical operation in accordance with operation expression determined according to the layout structure and/or the test item.

Furthermore, one embodiment of the invention provides a semiconductor device that includes on a semiconductor substrate, an image display area in which pixel cell drive circuits each including a pixel switch and a pixel capacitor that is coupled to the pixel switch and holds pixel data are arranged in a matrix corresponding to intersections between data lines and pixel switch control lines, and drive means for applying a test drive signal that has a level corresponding to a required logical value to each of two or more data lines or each of two or more pixel switch control lines. The level is set according to the operation expression of logical operation executed by logical operation means. The two or more data lines or the two or more pixel switch control lines are selected according to an interconnect layout structure on the semiconductor substrate and/or a test item. The semiconductor device also includes logical operation means for inputting as a logical value, outputs of potentials that arise, due to the application of the test drive signal, in the two or more data lines or the two or more pixel switch control lines, and executing logical operation in accordance with operation expression determined according to the layout structure and/or the test item so as to output a logical operation result.

Moreover, one embodiment of the invention provides the following configuration as a display.

Specifically, the display according to the embodiment of the invention includes a semiconductor substrate, a counter substrate having a common electrode that is disposed to face the semiconductor substrate, and a liquid crystal layer disposed between the semiconductor substrate and the counter substrate.

The semiconductor substrate includes an image display area in which pixel cell drive circuits each including a pixel switch and a pixel capacitor that is coupled to the pixel switch and holds pixel data are arranged in a matrix corresponding to intersections between data lines and pixel switch control lines, and drive means for applying a test drive signal that has a level corresponding to a required logical value to each of two or more data lines or each of two or more pixel switch control lines. The level is set according to the operation expression of logical operation executed by logical operation means. The two or more data lines or the two or more pixel switch control lines are selected according to an interconnect layout structure on the semiconductor substrate and/or a test item. The semiconductor substrate also includes logical operation means for inputting as a logical value, outputs of potentials that arise, due to the application of the test drive signal, in the two or more data lines or the two or more pixel switch control lines, and executing logical operation in accordance with operation expression determined based on the layout structure and/or the test item so as to output a logical operation result.

According to the above-described embodiments of the invention, appropriate two or more data lines or two or more pixel switch control lines are selected from data lines or pixel switch control lines disposed on a semiconductor substrate according to the interconnect layout structure on the semiconductor substrate and/or a test item.

Subsequently, test drive signals as certain logical values are applied to these selected two or more data lines or two or more pixel switch control lines according to the layout structure and/or the test item, and logical operation is performed on outputs of potentials, as logical values, that arise in the respective data lines or pixel switch control lines to which the test drive signals are applied. The kind of the logical operation is determined depending on the layout structure and/or the test item. In addition, the logical operation result changes depending on the states of the data lines or pixel switch control lines to which the test drive signals are applied, and therefore the result can be used as a determination factor for the test.

Thus, in the present invention, detection outputs as a determination factor for a test are indicated not by changes of an analog current level for example, but by binary values of 0 and 1 (H, L), i.e., digital values.

In addition, one embodiment of the present invention provides the following method as a test method for a semiconductor substrate in which pixel cell drive circuits each including a pixel switch and a pixel capacitor that is coupled to the pixel switch and holds pixel data are arranged in a matrix corresponding to intersections between data lines and pixel switch control lines.

Specifically, the method includes a drive step of driving the data line or the pixel switch control line as a test target with a test drive signal that has a required voltage level, and a comparison step of comparing the output level of a potential that arises in the data line or the pixel switch control line driven by the test drive signal, with a reference level to which a certain level is assigned, and outputting a comparison result as a logical value.

Furthermore, one embodiment of the invention provides a semiconductor device that includes on a semiconductor substrate, an image display area in which pixel cell drive circuits each including a pixel switch and a pixel capacitor that is coupled to the pixel switch and holds pixel data are arranged in a matrix corresponding to intersections between data lines and pixel switch control lines, drive means for driving the data line or the pixel switch control line as a test target with a test drive signal that has a required voltage level, and comparison means for comparing the output level of a potential that arises in the data line or the pixel switch control line driven by the test drive signal, with a reference level to which a certain level is assigned, and outputting a comparison result as a logical value.

Moreover, one embodiment of the invention provides the following configuration as a display.

The display according to the embodiment of the invention includes a semiconductor substrate, a counter substrate having a common electrode that is disposed to face the semiconductor substrate, and a liquid crystal layer disposed between the semiconductor substrate and the counter substrate.

The semiconductor substrate includes drive means for driving the data line or the pixel switch control line as a test target with a test drive signal that has a required voltage level, and comparison means for comparing the output level of a potential that arises in the data line or the pixel switch control line driven by the test drive signal, with a reference level to which a certain level is assigned, and outputting a comparison result as a logical value.

According to the above-described embodiment s of the invention, a test drive signal of a required level is applied to a data line or pixel switch control line, and thus a potential change arise in the data line or pixel switch control line according to the state of the line. Subsequently, a result of comparison between the thus obtained potential and a reference level is output as a logical value. Accordingly, the logical value output as the comparison result indicates the change depending on the state of the data line or pixel switch control line, and thus can be used as a determination factor for the test.

Thus, also in the embodiment s, detection outputs as a determination factor for a test are achieved as digital values.

### Brief Description of Drawings

Fig. 1 is a diagram illustrating the circuit configuration of a liquid crystal display common to first and second embodiments of the present invention.
Fig. 2 is a sectional view schematically illustrating an example of the interconnect layout structure on a semiconductor substrate included in a liquid crystal display of one embodiment.
Fig. 3 is a diagram illustrating the circuit configuration of a liquid crystal display according to the first embodiment (a first example).
Figs. 4A to 4D are diagrams showing the relationship between logical values of a test drive signal and outputs (logical values) from a logic circuit depending on the line defect state of a data line according to the first embodiment (the first example).
Fig. 5 is a diagram illustrating the circuit configuration of a liquid crystal display according to the first embodiment (a second example).
Figs. 6A to 6D are diagrams showing the relationship between logical values of a test drive signal and outputs (logical values) from a logic circuit depending on the line defect state of a data line according to the first embodiment (the second example).
Fig. 7 is a diagram illustrating the circuit configuration of a liquid crystal display according to the first embodiment (a third example).
Figs. 8A to 8L are diagrams showing the relationship between logical values of a test drive signal and outputs (logical values) from a logic circuit depending on the line defect state of a data line according to the first embodiment (the third example).
Fig. 9 is a diagram illustrating the circuit configuration of a liquid crystal display according to the first embodiment (a fourth example).
Fig. 10 is a diagram illustrating the circuit configuration of a liquid crystal display according to the first embodiment (a fifth example).
Fig. 11 is a diagram illustrating the circuit configuration of a liquid crystal display according to the second embodiment (a first example).
Fig. 12 is a diagram illustrating the circuit configuration of a liquid crystal display according to the second embodiment (a second example).

### Best Mode for Carrying out the Invention

Best modes (hereinafter, also referred to simply as embodiments) for carrying out the present invention will be described below. The present embodiment employs as an example an active matrix liquid crystal display, which is used in various video apparatuses typified by liquid crystal projector devices, and electronic apparatuses for example.

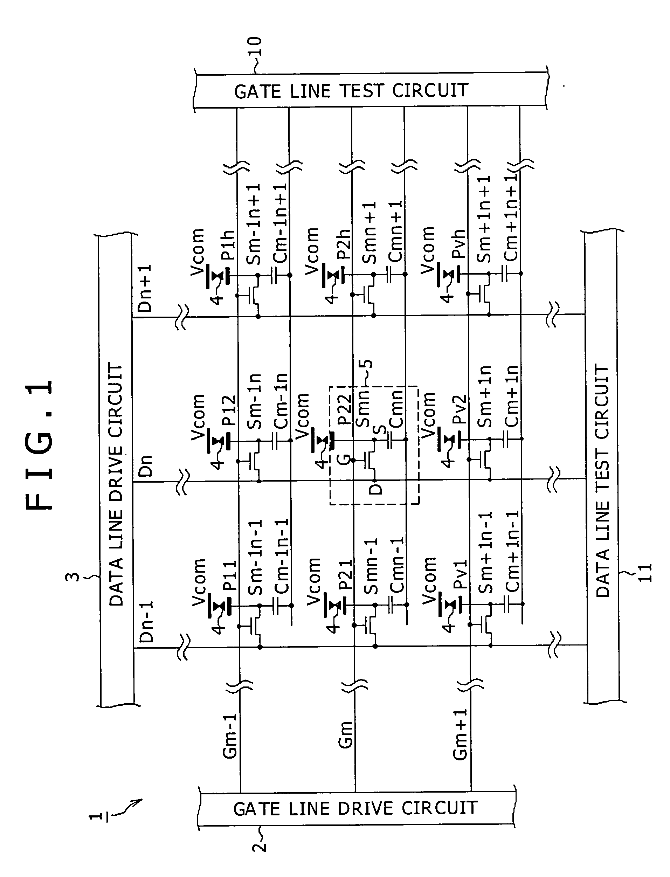

In the following, a first embodiment and a second embodiment will be described as embodiments of the present invention. Fig. 1 illustrates a circuit configuration example of a liquid crystal display common to the first and second embodiments. The basic structure of a liquid crystal display 1 shown in this diagram is constructed by forming on a semiconductor substrate at least requisite circuits typified by pixel cell drive circuits arranged in a matrix, for example. In addition, the liquid crystal display 1 has a structure in which a counter substrate having thereon a common electrode faces the semiconductor substrate, and a liquid crystal is enclosed between the semiconductor substrate and counter substrate.

In the present embodiment, a substrate made of silicon (Si) is used as the semiconductor substrate. On this semiconductor substrate, pixel cell drive circuits 5 are arranged in a matrix. In addition, formed on the substrate are a gate line drive circuit 2, a data line drive circuit 3, a data line test circuit 11 and a gate line test circuit 10. The test circuits 10 and 11 can be used in a defect test for at least data lines and gate lines as described later.

Initially, the circuit configuration of the pixel cell drive circuit 5 formed on the semiconductor substrate will be described with reference to the area enclosed by the dashed line in Fig. 1.

As shown in the diagram, one pixel cell drive circuit 5 includes a pixel switch Smn, a pixel capacitor Cmn and a pixel electrode P22.

The pixel switch Smn has a structure as an FET (field effect transistor) for example. The gate (G) of the pixel switch Smn is coupled to a gate line Gm, and the drain (D) thereof is coupled to a data line Dn. Each gate line and each data line is also formed on the semiconductor substrate.

The source (S) of the pixel switch Smn is coupled to one end of the pixel capacitor Cmn. The other end of the pixel capacitor Cmn is coupled to the common electrode in this case. The coupling node between the source of the pixel switch and the pixel capacitor Cmn is coupled to the pixel electrode P22.

The pixel cell drive circuits 5 thus formed are arranged in a matrix along the row and column directions as shown in the drawing. On the semiconductor substrate on which the pixel cell drive circuits 5 are thus formed, the pixel electrodes P of the respective pixel cell drive circuits 5 are arranged in a matrix and exposed to the outside.

The gate line drive circuit 2 includes a shift register for example, and in normal displaying, scans the gate lines on each row (one horizontal line) basis along the vertical direction. Specifically, the gate line drive circuit 2 outputs a pulse scan signal (scan pulse) in each one horizontal scan period to thereby scan a respective one of the gate lines in the order of the gate lines Gm - 1, Gm, Gm + 1 and so on. When the gate line Gm is driven due to the scanning by the gate line drive circuit 2 for example, gate voltage is applied to the gates of the pixel switches (Smn - 1, Smn and Smn + 1) on one row, coupled to the gate line Gm, and therefore these pixel switches (Smn - 1, Smn and Smn + 1) are turned on.

The data line drive circuit 3 is also a circuit including a shift register and so on. The data line drive circuit 3 sequentially shifts data for one horizontal line input from the external to thereby drive each of the data lines Dn - 1, Dn and Dn + 1 by sequential scanning along the horizontal direction.

A counter substrate having thereon a common electrode to which a common potential Vcom is applied is disposed to face the thus formed semiconductor substrate. Moreover, a liquid crystal is enclosed between the semiconductor substrate and counter substrate to thereby form a liquid crystal layer 4. In this manner, the liquid crystal display 1 of the present embodiment is constructed.

Simple description will be made below about the operation of normal image displaying by the thus formed liquid crystal display 1.

For example, initially, the gate line drive circuit 2 shifts its output at timing of each one horizontal scan period based on the operation of the shift register, to thereby sequentially scan the gate lines from the first row to the last row.

Thus, in a certain horizontal scan period, gate voltage is applied to the gates of the pixel switches Sm - 1n - 1, Sm - In and Sm - 1n + 1 on the row of the gate line Gm - 1 for example, which turns on these pixel switches. In the subsequent horizontal scan period, while the pixel switches Sm - 1n - 1, Sm - 1n and Sm - 1n + 1 are turned off, the pixel switches Smn - 1, Smn and Smn + 1 on the row of the next gate line Gm are turned on. Subsequently, scanning of the remaining gate lines is carried out in a similar way.

In addition, in a time period for scanning one gate line as described above, the data lines from the first column to the last column are sequentially driven due to the operation of the shift register in the data line drive circuit 3. Here, driving the data lines corresponds to outputting of voltage values in accordance with pixel data from the data line drive circuit 3 to the data lines.

Here, a situation is assumed in which the data line Dn - 1 is driven in a time period for scanning the gate line Gm for example. In this case, the pixel switches Smn - 1, Smn and Smn + 1 of which gates are coupled to the gate line Gm are in the on-state. Driving of the data line Dn - 1 allows charges depending on the voltage (data) applied to the data line Dn - 1 to be accumulated in the pixel capacitor Cmn - 1, which is coupled to the pixel switch Smn - 1 at the intersection between the gate line Gm and the data line Dn - 1, via the drain and source of the pixel switch Smn - 1. The potential according to the amount of the accumulated charges arises across the both ends of the pixel capacitor Cmn - 1. That is, data has been written to the pixel capacitor Cmn - 1. The potential arising across the pixel capacitor Cmn - 1 due to the data writing is also generated in the pixel electrode P21 coupled to the source of the same pixel switch Smn - 1.

After the data writing via the data line Dn - 1 is completed, the next data line Dn is driven while holding the data written to the pixel capacitor Cmn - 1. In this case, data is written to the pixel capacitor Cmn coupled to the pixel switch Smn at the intersection between the gate line Gm and the data line Dn, and therefore a potential arises in the pixel electrode P22.

Disposed to face the pixel electrodes P is the common electrode to which the potential Vcom is applied with the intermediary of the liquid crystal layer 4 therebetween.

If the potentials according to data sequentially arise in the pixel electrodes P21 and P22 as described above, in accordance with the potential difference between the potential of the pixel electrode P21 and the potential Vcom, the liquid crystal of the liquid crystal layer 4 between the pixel electrode P21 and the common electrode reacts and is excited. That is, driving of the pixel cells is sequentially carried out.

When the sequential driving of the data lines by the data line drive circuit 3 is progressed in the scan period of the gate line Gm as described above, and driving of the pixels of one horizontal line is completed, the gate line drive circuit 2 ends the scanning of the gate line Gm, and scans the next gate line Gm - 1. In the scan period of the gate line Gm - 1, the data line drive circuit 3 sequentially drives the data lines to thereby drive the pixels of one horizontal line in a similar way.

Such operation is implemented for each of all the horizontal lines, and thereby data writing for one screen is completed. In addition, the data writing for one screen is repeated with a period of one field for example, which allows image displaying.

The present embodiment carries out a test as to whether or not defects referred to as a so-called line defect exist in the data lines and gate lines formed on the semiconductor substrate of the liquid crystal display 1. The term line defect indicates a defect such as disconnection or short-circuit caused in the data lines and gate lines.

As is also apparent from the structure of the semiconductor substrate included in the liquid crystal display 1 shown in Fig. 1 and the image displaying operation thereof for example, if a line defect exists in the data line and gate line, a serious problem arises that adequate display driving for the line having the defect is impossible. The test for line defects is carried out in order to exclude such defect products.

In the present embodiment, as shown in Fig. 1, the data line test circuit 11 and the gate line test circuit 10 are formed on the semiconductor substrate of the liquid crystal display 1 in order to test the presence of defects in the data lines and gate lines.

As shown in the drawing, ends of the data lines (··· Dn - 1, Dn, Dn + 1 ··· ), opposite to the ends coupled to the data line drive circuit 3, are coupled to the data line test circuit 11. Similarly, ends of the gate lines (··· Gm - 1, Gm, Gm + 1···), opposite to the ends coupled to the data line drive circuit 3, are coupled to the gate line test circuit 10.

The first embodiment includes logic circuits in the data line test circuit 11 and the gate line test circuit 10 in order to test the presence of line defects. The kind of the logical operation executed by the logic circuit and which lines of the data lines or gate lines should be coupled to the logic circuit, should be determined depending on the actual interconnect layout structure on the semiconductor substrate, in consideration of obtaining adequate determination results of the test for line defects.

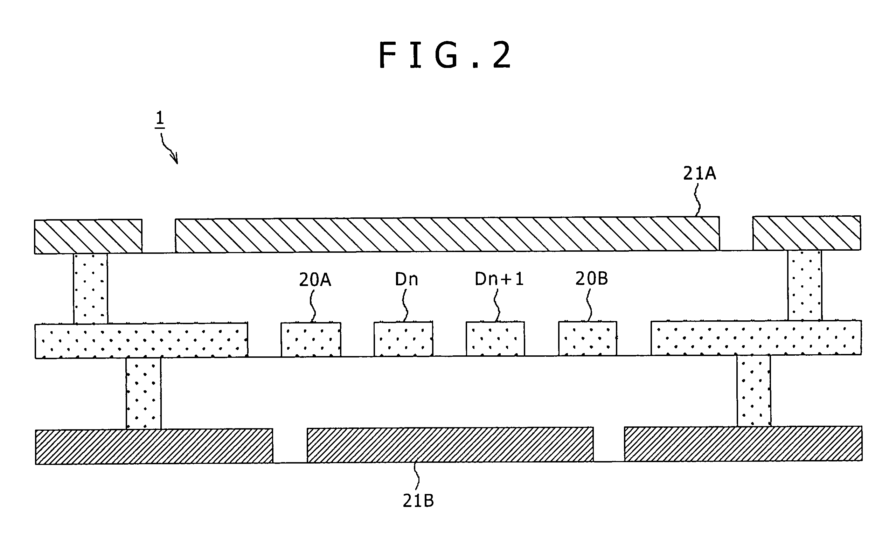

Fig. 2 illustrates an example of the interconnect layout structure on the semiconductor substrate as the liquid crystal display 1 shown in Fig. 1. This drawing illustrates as a sectional view the layout structure on the semiconductor substrate. For simplified description, Fig. 2 shows only the interconnect layout structure of the data lines, and that of the gate lines are omitted. The following specific description of the configurations for tests is based on the premise that lines have the interconnect layout shown in this drawing.

Referring to Fig. 2, two data lines Dn and Dn + 1 are disposed adjacent to each other in the layout (arrangement) structure on the semiconductor substrate. Shield lines 20A and 20B are disposed to neighbor the data lines Dn and Dn + 1, respectively. The shield lines 20A and 20B shield the data lines Dn and Dn + 1 from other interconnects on the same layer.

This semiconductor substrate has a multi-layered structure. A light-blocking line 21A is disposed on the upper layer facing the data lines Dn and Dn + 1, and the shield lines 20A and 20B. A light-blocking line 21B is disposed on the lower layer. The light-blocking line is a line structure provided to prevent light from the upper layer side from entering the lower layer.

Typically a fixed potential such as a source potential or ground potential is applied to the shield lines and light-blocking lines.

If disconnection as a line defect exists in a data line (or gate line) for example, the part beyond the disconnection point is not driven and therefore enters the high-impedance state. Thus, a given potential arises in the part due to current leakage, coupling capacitance between the part and near interconnects, and so on, depending on the surrounding interconnect layout. In addition, if a data line (or gate line) involves short-circuit with another neighboring interconnect as a line defect, a given potential arises according to conditions such as the potentials of the short-circuited interconnects.

That is, if a line defect due to disconnection or short-circuit exists in a data line (or gate line), the potential arising in the data line (or gate line) depends on the interconnect layout structure surrounding the data line (or gate line) on the semiconductor substrate, on the premise that the level of voltage (test drive signal) applied for a test is determined for example. Note that the term interconnect layout structure refers to the physical arrangement of the interconnects encompassing the condition of potentials applied to the interconnects, also as described above.

On the premise of this, a principle can be derived in which, if voltages with levels corresponding to logical values 1 and 0 ((H, L) in the positive logic) are applied as a test drive signal for example, detection outputs according to logical values H, L can be obtained also from data lines (or gate lines) depending on the presence and state of line defects.

Based on this principle, the first embodiment is provided with the following configuration to thereby carry out tests.

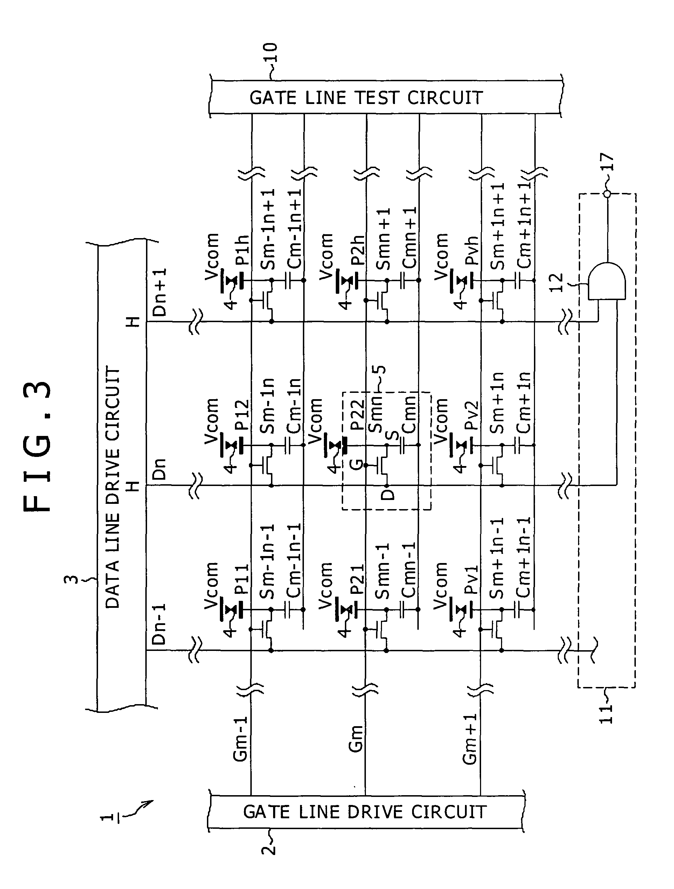

Fig. 3 shows a first example of the first embodiment, and illustrates an internal configuration example of the data line test circuit 11 for testing the presence of disconnection in data lines as a line defect.

The data line test circuit 11 is premised on the layout structure in Fig. 2, in which the data lines Dn and Dn + 1 are disposed adjacent to each other. Therefore, based on this premise, ends of these two data lines Dn and Dn + 1 out of all the data lines are coupled to one AND gate 12 in the data line test circuit 11.

Thus, the AND gate 12 receives as logical values the potentials arising at the ends of the data lines Dn and Dn + 1, remote from the data line drive circuit 3. The AND gate 12 then executes AND logical operation on the inputs, and outputs a logical value as the operation result from a test output terminal 17. The test output terminal 17 is coupled to a test input terminal of a test device not shown in the drawing for example. Thus, e.g. a test operator monitors the indication by the test device, and thereby can recognize test results as outputs from the AND gate 12.

It should be noted that plural logic circuits coupled to data lines other than the data lines Dn and Dn + 1 are formed in the data line test circuit 11 although not shown in the drawing. The drawing illustrates only the AND gate 12 corresponding to the data lines Dn and Dn + 1 for convenience of description.

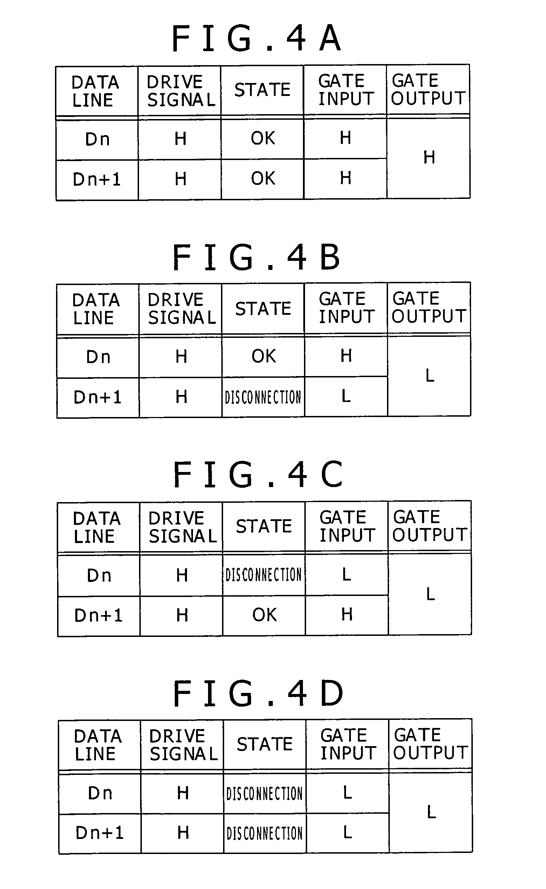

In the above-described configuration, the presence of disconnection in the data lines Dn and Dn + 1 can be tested as described below referring to Figs. 4A to 4D.

The description for Figs. 4A to 4A is premised on the assumption that the following fact is known in advance about the surrounding interconnect layout structure. Specifically, when the H level potential is applied to the data line Dn to drive it, the data line Dn is driven directly by the H level if the data line Dn is in the non-defect state with no disconnection. Therefore, the potential corresponding to the H level arises in the data line Dn. In contrast, if the data line Dn has disconnection, a low potential that does not correspond to the H level arises therein. This fact also applies to the data line Dn + 1 similarly.

Accordingly, in this disconnection test, the data line drive circuit 3 simultaneously applies to the data lines Dn and Dn + 1 voltage with a level corresponding to the H level (logical value 1) as a test drive signal.

In carrying out the test, the data line drive circuit 3 implements signal applying operation different from that for normal displaying operation described above. This operation of applying test drive signals, for carrying out the test, by the data line drive circuit 3 should be controlled by an external test device or the like not shown in the drawing.

Figs. 4A to 4D show the relationship among the pattern of logical values of the test drive signal, the states (the presence of disconnection) of the data lines Dn and Dn + 1, the corresponding pattern of logical value inputs to the AND gate 12 (gate input), and the corresponding AND operation output (gate output: output from the test output terminal 17).

Referring to Fig. 4A, when test drive signals of the H level is applied to the data lines Dn and Dn + 1, and both the data lines Dn and Dn + 1 are in the non-defect state without disconnection, both the potentials arising in the data lines Dn and Dn + 1 are also at the H level. As a result, the gate output from the test output terminal 17 is at the H level.

Referring to Fig. 4B, when the data line Dn involves no disconnection but the data line Dn + 1 involves disconnection, the potential corresponding to the H level arises in the data line Dn while a potential corresponding to the L level arises in the data line Dn + 1, and these potentials are input to the AND gate 12. Thus, the output from the AND gate 12 is at the L level.

Referring to Fig. 4C, also when the data line Dn involves disconnection but the data line Dn + 1 involves no disconnection, a potential corresponding to the L level arises in one data line Dn while the potential corresponding to the H level arises in the other data line Dn + 1, and therefore the output from the AND gate 12, which performs AND on these potentials, is at the L level.

Referring to Fig. 4D, when both the data lines Dn and Dn + 1 involve disconnection, a potential corresponding to the L level arises in both the data lines Dn and Dn + 1. Accordingly, also in this case, the output from the AND gate 12 is at the L level.

In this manner, based on the relationships shown in Figs. 4A to 4D, a determination can be made that neither of the data lines Dn and Dn + 1 involves disconnection if the H level is output from the AND gate 12. In contrast, a determination can be made that at least either of the data lines Dn and Dn + 1 involves disconnection if the L level is output.

Subsequently, description will be made about a configuration for a test for such potential setting of the surrounding interconnects that, on contrary to the above case, a potential corresponding to the H level arises in the data lines Dn and Dn + 1 having disconnection due to an influence of other interconnects, on the premise of the physical interconnect layout structure in Fig. 2.

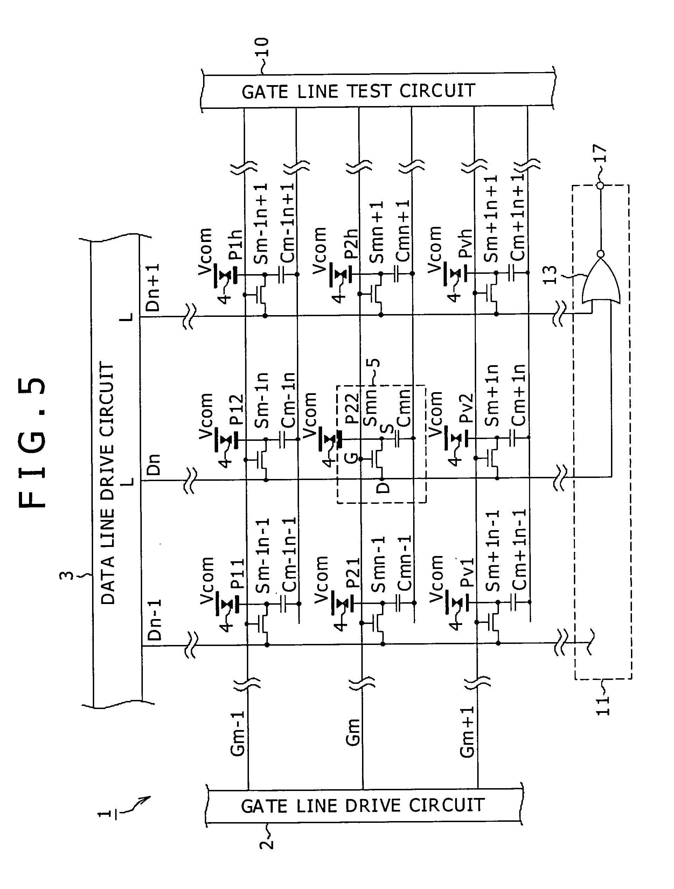

Fig. 5 illustrates a configuration example of the data line test circuit 11 for this case as a second example of the first embodiment. The same parts in Fig. 5 as those in Fig. 3 are given the same numerals and will not be described below.

As shown in Fig. 5, in this case, a NOR gate 13 is provided instead of the AND gate 12 for the data lines Dn and Dn + 1. Specifically, the ends of the data lines Dn and Dn + 1, remote from the data line drive circuit 3, are coupled to the inputs of the NOR gate 13. Therefore, operation results by the NOR gate 13 are output from the test output terminal 17.

In this configuration, the data line drive circuit 3 simultaneously applies to the data lines Dn and Dn + 1 a signal corresponding to the L level as a test drive signal.

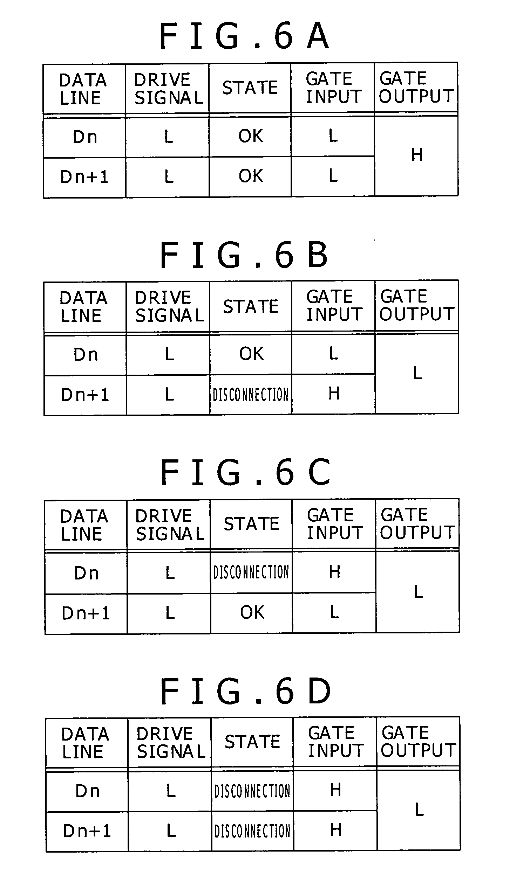

This configuration of Fig. 5 provides detection outputs shown in Figs. 6A to 6D.

Fig. 6A corresponds to the state in which both the data lines Dn and Dn + 1 are in the non-defect state without disconnection. Here, a test drive signal of the L level is applied to the data lines Dn and Dn + 1 as described above. If both the data lines Dn and Dn + 1 are in the non-defect state without disconnection, both the potentials arising in these data lines Dn and Dn + 1 also correspond to the L level. Accordingly, in this case, the logical values (L, L) are input to the NOR gate 13, which results in the operation output of the H level.

Referring next to Fig. 6B, when the data line Dn involves no disconnection but the data line Dn + 1 involves disconnection, the potential corresponding to the L level arises in the data line Dn since it is driven directly by the L level while a potential corresponding to the H level arises in the data line Dn + 1 due to an influence of other interconnects, and these potentials are input to the NOR gate 13. Thus, the output from the NOR gate 13 is at the L level.

Referring to Fig. 6C, when the data line Dn involves disconnection but the data line Dn + 1 involves no disconnection, a potential corresponding to the H level arises in the data line Dn while the potential corresponding to the L level directly arises in the data line Dn + 1, and therefore the output from the NOR gate 13, which performs AND on these potentials, is at the L level.

Referring to Fig. 6D, when both the data lines Dn and Dn + 1 involve disconnection, a potential corresponding to the H level arises in both the data lines Dn and Dn + 1. Accordingly, also in this case, the output from the NOR gate 13 is at the L level.

In this manner, also based on the relationships shown in Figs. 6A to 6D, a determination can be made that both the data lines Dn and Dn + 1 are in the non-defect state without disconnection if the H level is output from the NOR gate 13. In contrast, a determination can be made that at least either of the data lines Dn and Dn + 1 involves disconnection if the L level is output.

As described above, in the first embodiment, the first example for Figs. 3 to 4D and the second example for Figs. 5 to 6D have a configuration for carrying out a test about disconnection as one kind of a line defect in data lines. In the following, description will be made about configurations for carrying out a test as to the presence of short-circuit with another interconnect, as another kind of a line defect in data lines.

The following description is also premised on the physical interconnect layout structure in Fig. 2, and shows as an example how to test the presence of short-circuit in the data lines Dn and Dn + 1.

When testing the presence of short-circuit in the data lines Dn and Dn + 1, the following two states need to be taken into consideration as the possible short-circuit states: the state in which the data lines Dn and Dn + 1 are short-circuited with each other; and the state in which the data lines Dn and Dn+1 are not short-circuited with each other but at least either of the data lines Dn and Dn + 1 is short-circuited with neighboring another interconnect. It is needed to obtain, for both the states, accurate determination results as to the presence of short-circuit.

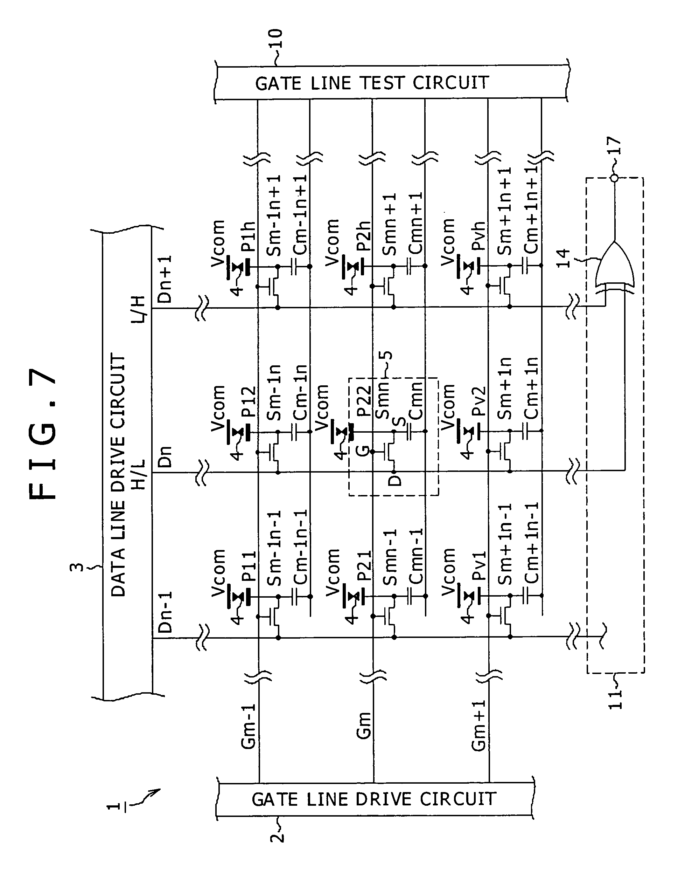

As a result of considering the above-described respects, a third example of the first embodiment is designed, as shown in Fig. 7, to include an EXOR (Exclusive OR) gate 14 in the data line test circuit 11, and couple the inputs of the EXOR gate 14 with ends of the data lines Dn and Dn + 1. The same parts in Fig. 7 as those in Figs. 3 and 5 are given the same numerals and will not be described below.

In this configuration, the data line drive circuit 3 applies test drive signals corresponding to (H, L) levels to the data lines Dn and Dn + 1, respectively. In addition to this, the signal levels are interchanged, so that test drive signals of (L, H) levels are also applied to the data lines Dn and Dn + 1, respectively.

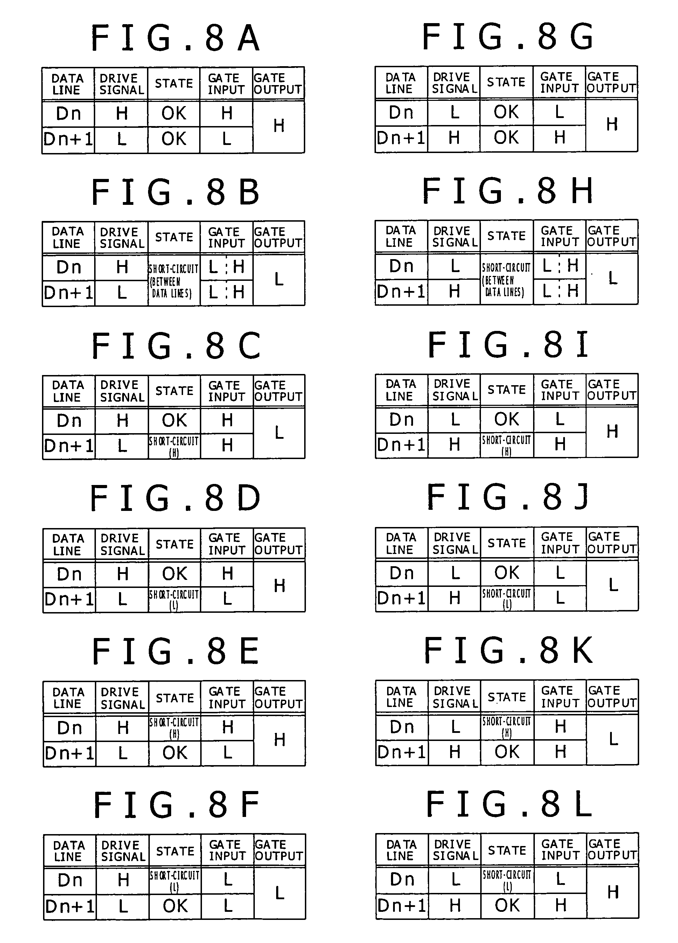

Figs. 8A to 8I show the relationship between test drive signals and a detection output in this configuration.

Figs. 8A to 8F show the relationship when test drive signals having a combination pattern of (H, L) levels are applied to the data lines Dn and Dn + 1. Figs. 8G to 8L show the relationship when test drive signals having a combination pattern of (L, H) levels are applied to the data lines Dn and Dn + 1. The respective pairs of the tables laterally neighboring to each other in the drawing, i.e., Figs. 8A and 8G, Figs. 8B and 8H, Figs. 8C and 8I, Figs. 8D and 8J, Figs. 8E and 8K, and Figs. 8F and 8L each correspond to the same states of the data lines Dn and Dn + 1.

Referring first to Fig. 8A, when test drive signals with a combination pattern of (H, L) levels are applied to the data lines Dn and Dn + 1, the data lines Dn and Dn + 1 are driven directly by the applied test drive signals if both the data lines Dn and Dn + 1 involve no short-circuit and thus have no defect. Therefore, the potentials corresponding to (H, L) levels also arise in the data lines Dn and Dn + 1, respectively, and these potentials are input to the EXOR gate 14, which results in the operation output of the H level.

Referring next to Fig. 8G, for the data lines with the same non-defect state as that of Fig. 8A, the level pattern of test drive signals is changed so that signals of (L, H) levels are applied to the data lines Dn and Dn + 1.

In this case, the potentials corresponding to (L, H) levels arise in the data lines Dn and Dn + 1, respectively. That is, the inverted potentials arise in the respective data lines. The potentials are then input to the EXOR gate 14, and therefore the operation output is at the H level.

As described above, if both the data lines Dn and Dn + 1 involve no short-circuit with another interconnect and thus are in the non-defect state, even when the pattern of test drive signals applied to the data lines Dn and Dn + 1 is interchanged between (H, L) and (L, H), both the patterns result in the operation output of the H level from the EXOR gate 14.

That is, when test drive signals with the respective patterns of (H, L) and (L, H) are input in a test, and the operation output from the EXOR gate 14 is at the H level for both the patterns, it can be determined that both the data lines Dn and Dn + 1 have no defect.

Referring next to Fig. 8B, under the state in which the data lines Dn and Dn + 1 are short-circuited with each other, when test drive signals having a combination pattern of (H, L) are applied to the data lines Dn and Dn + 1, a common potential corresponding to either of the H and L levels arises in the data lines Dn and Dn + 1. That is, a potential corresponding to the same logical value arises whether the H or L level. Therefore, the operation output from the EXOR gate 14 is at the L level.

Referring next to Fig. 8H, under the state in which the data lines Dn and Dn + 1 are short-circuited with each other similarly to Fig. 8B, the combination pattern of test drive signals is changed so that signals with a pattern of (L, H) are applied to the data lines Dn and Dn + 1. Also in this case, similarly to Fig. 8B, a common potential corresponding to either of the H and L levels arises in the data lines Dn and Dn + 1, and therefore the operation output from the EXOR gate 14 is at the L level.

Thus, if the data lines Dn and Dn + 1 are short-circuited with each other and test drive signals with the respective patterns of (H, L) and (L, H) are input, both the patterns result in the operation output of the L level from the EXOR gate 14.

Referring next to Fig. 8C, under the state in which the data line Dn is in the non-defect state without short-circuit but the data line Dn + 1 is short-circuited with another interconnect so as to be drawn into the H level, test drive signals having a combination pattern of (H, L) levels are applied to the data lines Dn and Dn + 1.

At this time, the potentials of the H level arise both in the data lines Dn and Dn + 1. Therefore, in this case, the operation output from the EXOR gate 14 is at the L level.

Referring next to Fig. 8I, under the state in which the data lines Dn and Dn + 1 are short-circuited with each other similarly to Fig. 8B, the combination pattern of test drive signals is changed so that signals with a pattern of (L, H) are applied to the data lines Dn and Dn + 1.

In this case, a potential corresponding to the L level arises in the data line Dn since it is driven by the test drive signal of the L level. In the data line Dn + 1, the potential of the H level, which is the same as the level of the test drive signal, arises. Accordingly, although the data line Dn + 1 is short-circuited, the operation output of the H level is obtained from the EXOR gate 14 as with the output for the non-defective data lines Dn and Dn + 1.

That is, if the data line Dn involves no defect but the data line Dn + 1 is short-circuited and thus is at the H level, the operation outputs with the different values are obtained from the EXOR gate 14, i.e., the output is at the L level when the level pattern of test drive signals to the data lines Dn and Dn + 1 is (H, L), and is at the H level when it is (L, H).

Referring next to Fig. 8D, under the state in which the data line Dn is in the non-defect state without short-circuit but the data line Dn + 1 is short-circuited with another interconnect so as to be drawn into the L level, test drive signals having a combination pattern of (H, L) levels are applied to the data lines Dn and Dn + 1.

At this time, since the potential corresponding to the H level arises in the data line Dn and a potential of the L level arises in the data line Dn + 1, the operation output of the H level is obtained from the EXOR gate 14.

In contrast, referring to Fig. 8J, under the state in which the data line Dn involves no defect but the data line Dn + 1 is short-circuited so as to be drawn into the L level similarly to Fig. 8D, test drive signals with a combination pattern of (L, H) levels are applied to the data lines Dn and Dn + 1. In this case, both the potentials from the data lines Dn and Dn + 1 are at the L level, and therefore the operation output of the L level is obtained from the EXOR gate 14.

That is, if the data lines are in the above-described defect state, the operation outputs with the different values are obtained from the EXOR gate 14, i.e., the output is at the H level when the level pattern of test drive signals to the data lines Dn and Dn + 1 is (H, L), and is at the L level when it is (L, H).

Referring next to Fig. 8E, when the data line Dn is short-circuited and thus is at the H level while the data line Dn + 1 involves no defect, test drive signals with a combination pattern of (H, L) levels are applied to the data lines Dn and Dn + 1. As a result, potentials with the same logical value pattern as that of the test drive signals are input, and thus the operation output from the EXOR gate 14 is at the H level.

Referring next to Fig. 8K, under the same state of the data lines as that of Fig. 8E, test drive signals with a combination pattern of (L, H) levels are applied to the data lines Dn and Dn + 1. In this case, both the potentials from the data lines Dn and Dn + 1 are at the H level, and therefore the operation output of the L level is obtained from the EXOR gate 14.

That is, also for this defect state, the operation outputs with the different values are obtained from the EXOR gate 14, i.e., the output is at the H level when the level pattern of test drive signals to the data lines Dn and Dn + 1 is (H, L), and is at the L level when it is (L, H).

Referring next to Fig. 8F, when the data line Dn is short-circuited and thus is at the L level while the data line Dn + 1 involves no defect, test drive signals with a combination pattern of (H, L) levels are applied to the data lines Dn and Dn + 1. In this case, potentials of (L, L) levels are input to the EXOR gate 14. Therefore, the operation output from the EXOR gate 14 is at the L level.

Referring next to Fig. 8I, under the same state of the data lines as that of Fig. 8F, test drive signals with a combination pattern of (L, H) levels are applied to the data lines Dn and Dn + 1. In this case, the potential from the data line Dn is at the L level due to short-circuit while the potential from the data line Dn + 1 is at the H level since it is driven by the test drive signal. As a result, the operation output of the H level is obtained from the EXOR gate 14.

Thus, for this defect state, the operation outputs with the different values are obtained from the EXOR gate 14, i.e., the output is at the L level when the level pattern of test drive signals to the data lines Dn and Dn + 1 is (H, L), and is at the H level when it is (L, H).

As is apparent from the above description with reference to Figs. 8A to 8L, by applying to the data lines Dn and Dn + 1 test drive signals having combination patterns of (H, L) / (H, L) levels and observing the logical value pattern of the operation outputs from the EXOR gate 14, the defect state of the data lines Dn and Dn + 1 in regard to short-circuit can be understood.

Specifically, as shown in Figs. 8A and 8G, only when the operation output of the H level is obtained from the EXOR gate 14 for both the combination patterns of (H, L) / (H, L) levels of test drive signals to the data lines Dn and Dn + 1, it is indicated that the data lines Dn and Dn + 1 are in the non-defect state without short-circuit.

In contrast, when the operation output from the EXOR gate 14 is not at the H level for both the combination patterns of (H, L) / (H, L) levels of test drive signals to the data lines Dn and Dn + 1, i.e., when the pattern of operation outputs is L / L, H / L or L /H, it is indicated that short-circuit exists in at least one of the data lines Dn and Dn + 1.

Of the patterns of operation outputs from the EXOR gate 14, the pattern L / L is obtained only when the data lines Dn and Dn + 1 are short-circuited with each other as shown in Figs. 8B and 8H. Therefore, the appearance of this pattern allows a determination that the data lines Dn and Dn + 1 are short-circuited with each other.

In addition, as shown in Figs. 8B and 8J, and Figs. 8E and 8K, the pattern H / L of operation outputs from the EXOR gate 14 allows a determination that the defect state is either the state in which the data line Dn + 1 is short-circuited and thus is at the L level, or the state in which the data line Dn is short-circuited and thus is at the H level.

Moreover, as shown in Figs. 8C and 8I, and Figs. 8F and 8I, the pattern L / H of operation outputs from the EXOR gate 14 allows a determination that the defect state is either the state in which the data line Dn + 1 is short-circuited and thus is at the H level, or the state in which the data line Dn is short-circuited and thus is at the L level.

It should be noted that the configurations for tests described with reference to Figs. 2 to 8L are also applicable to gate lines in an exactly similar way.

Specifically, gate lines are selected based on the actual interconnect layout structure on a semiconductor substrate, and the logic circuit configuration inside the data line test circuit 11 shown in Fig. 3, 5 or 7 for example is formed inside the gate line test circuit 10. Furthermore, test drive signals of a predetermined level of H / L levels are applied from the gate line drive circuit 2 to the requisite gate lines, and the logical operation result output from the logic circuit in the gate line test circuit 10 is obtained. Based on this logical operation result, a determination is made as to the presence of a line defect in the gate lines.

As described above, in the first embodiment, initially two or more data lines (or gate lines) are selected as a detection target in consideration of allowing a test about line defects (disconnection and short-circuit) based on the interconnect layout structure including the data lines (or gate lines) on a semiconductor substrate. In addition, a logical operation circuit (logical operation expression) in the data line test circuit 11 (or the gate line test circuit 10) is determined that is coupled to the selected data lines (or gate lines) and outputs detection results indicated by logical values.

The combination of the selection of data lines (or gate lines) to be detected and the logical operation circuit (logical operation expression) is based on the above-described interconnect layout structure. However, in particular, the determination of the logical operation circuit (logical operation expression) differs depending on the test item for example, as is also apparent from the above description in which the disconnection test of the first and second examples employs the AND gate 12 or the NOR gate 13, while the short-circuit test in the third example employs the EXOR gate 14. That is, in the first embodiment, not only the interconnect layout structure but also the test item is a factor of determination as to the combination of the selection of data lines (or gate lines) and a logical operation circuit (logical operation expression).

Based on the selection of data lines (and gate lines) and the setting of logical operation expression, the data line test circuit 11 having a logical operation circuit like that exemplified in Figs. 3, 5 and 7 for example (also applicable to the gate line test circuit 10) is constructed. In such a configuration, test drive signals having a combination pattern of logical values, which is determined based on the above-described setting of logical operation expression, are applied to the data lines (and gate lines), and the output from the data line test circuit 11 (logical operation circuit) is observed to thereby make a determination as to line defects.

In this configuration, a determination as to defects is made based on a logical value as the logical operation result, which means that this determination is not based on changes of the current level as an analog value unlike conventional techniques but based on digital values of 1, 0 (H, L). Thus, the need to take into consideration errors of the analog current level is eliminated unlike conventional techniques, and accurate determination results are achieved based on determination depending on binary values. In step with this, test operation can be simplified and a test time period can be shortened for example, which enhances the operation efficiency.

It should be noted, for reconfirmation, that the term interconnect layout structure used in the present invention is a concept that also encompasses the state of potential setting for interconnects. That is, in addition to the physical interconnect layout structure, the potentials, such as a ground potential and a source potential, assigned to the arranged interconnects are also included in the factor.

In the present embodiment, also as described above, a logic circuit capable of detecting line defects is formed in consideration of the above-described potential setting for interconnects as the interconnect layout structure on a semiconductor substrate. Moreover, the levels of test drive signals to be applied to the data lines are determined to be either the H or L level according to the logic circuit.

which potential is assigned (specifically, which of a ground potential and source potential is assigned) to interconnects that should be provided with a fixed potential, such as shield lines, is determined at the time of design of the semiconductor substrate. Therefore, the logic circuit configuration inside the data line test circuit 11 or the gate line test circuit 10 is determined so that line defects can be detected depending on the potentials of the interconnects determined at the design.

Conversely, in the design of the semiconductor substrate, the potentials of the interconnects may be set so that line defects can be detected.

In the configuration of Figs. 3 to 4D as the first example and the configuration of Figs. 5 to 6D as the second example in the first embodiment, only the AND gate 12 or the NOR gate 13 is provided in the data line test circuit 11 corresponding to a disconnection test. In addition, the configuration of Figs. 7 to 8L as the third example is provided with the EXOR gate 14 corresponding to a short-circuit test. That is, each of the configurations of the first, second and third examples in the first embodiment can test only disconnection or short-circuit as line defects in the data lines (Dn and Dn + 1).

However, these configurations are only for convenience of simplification of description, and each of the above-described diagrams only shows a basic configuration for testing the state of disconnection or short-circuit in the data lines Dn and Dn + 1 on the assumption of the interconnect layout structure of Fig. 2.

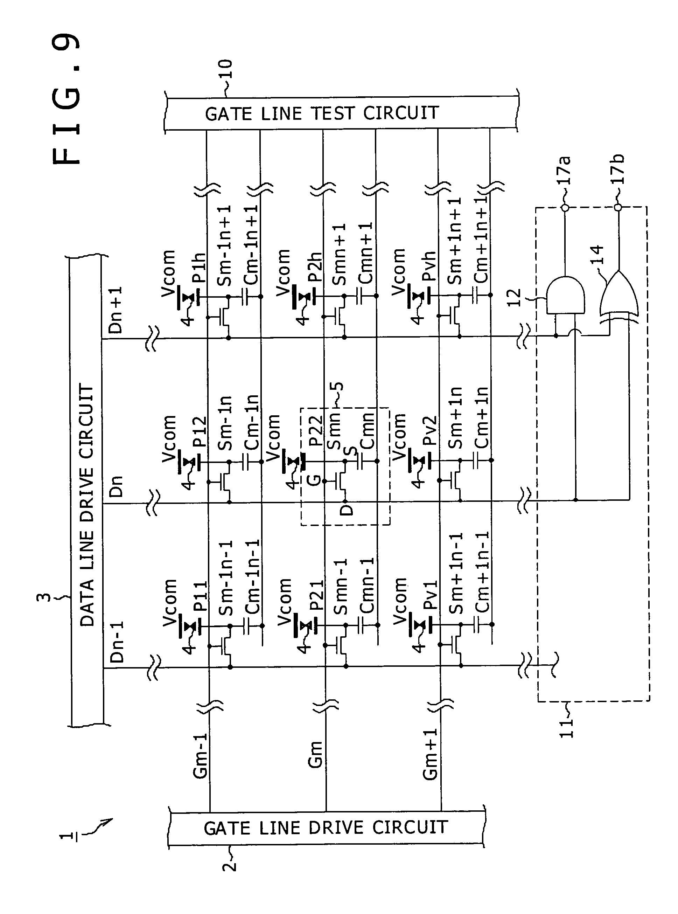

Therefore, an example of a configuration that can test both disconnection and short-circuit is illustrated in Fig. 9 as a fourth example of the first embodiment. The configuration in Fig. 9 is also premised on the interconnect layout structure of Fig. 2, and based on this premise, Fig. 9 illustrates an example of a configuration capable of testing both disconnection and short-circuit in the data lines Dn and Dn + 1.

Referring to Fig. 9, the data line test circuit 11 is provided with the AND gate 12 and the EXOR gate 14 corresponding to the data lines Dn and Dn + 1. In this configuration, the data line test circuit 11 includes two test output terminals: a test output terminal 17a for outputting the operation result by the AND gate 12, and a test output terminal 17b for outputting the operation result by the EXOR gate 14. Furthermore, each of the ends of the data lines Dn and Dn + 1, remote from the data line drive circuit 3, is bifurcated, followed by being coupled to the AND gate 12 and the EXOR gate 14.

This configuration is a combination of the configuration for a disconnection test shown in Fig. 3 and the configuration for a short-circuit test shown in Fig. 7.

For the disconnection test, the configuration including the AND gate 12 shown in Fig. 3 is employed. Specifically, this configuration is premised on such an interconnect layout that if the data lines Dn and Dn + 1 involve disconnection, low potentials not corresponding to the H level arise in the data lines when the data lines are driven by the H level.

When testing disconnection, as described referring to Figs. 4A to 4D, the data line drive circuit 3 outputs to the data lines Dn and Dn + 1 test drive signals that both are at the H level. Subsequently, the operation output that is output from the AND gate 12 to the test output terminal 17a of the data line test circuit 11 is monitored to thereby test the presence of disconnection in the data lines Dn and Dn + 1.

In addition, when testing short-circuit, as described referring to Figs. 8A to 8L, applied to the data lines Dn and Dn + 1 are test drive signals with a combination pattern of (H, L) levels, and test drive signals with a combination pattern of (L, H) levels. In this case, the output from the EXOR gate 14 is brought out from the test output terminal 17b of the data line test circuit 11. A short-circuit test is carried out based on the levels of operation results by the EXOR gate 14 obtained from the test output terminal 17b upon application of the test drive signals with two combination patterns described above.

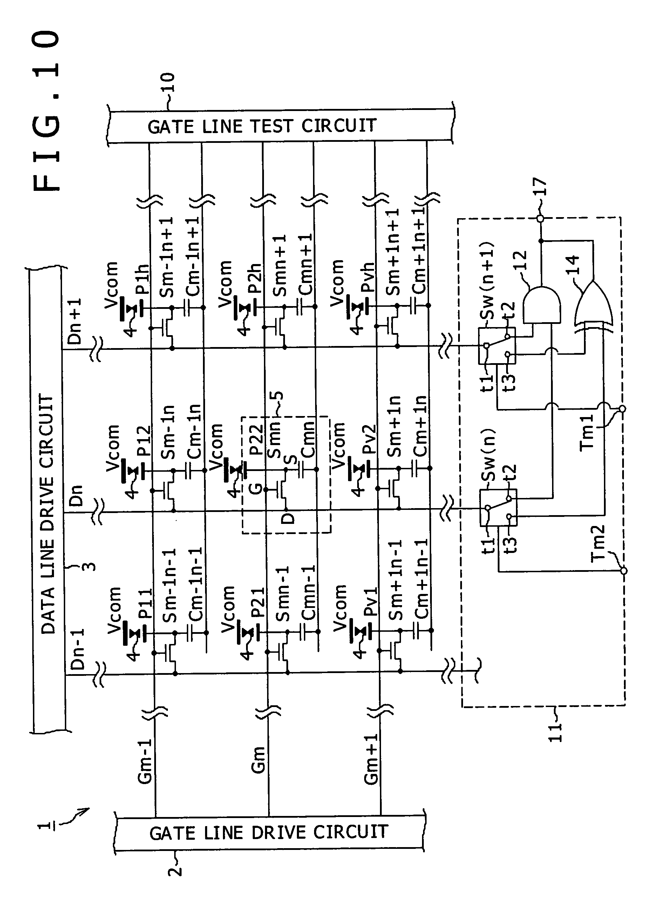

In addition, as a modification, it is also available that the data line test circuit 11 has a configuration shown in Fig. 10 for testing the state of disconnection and short-circuit in the data lines Dn and Dn + 1 like the configuration of Fig. 9.

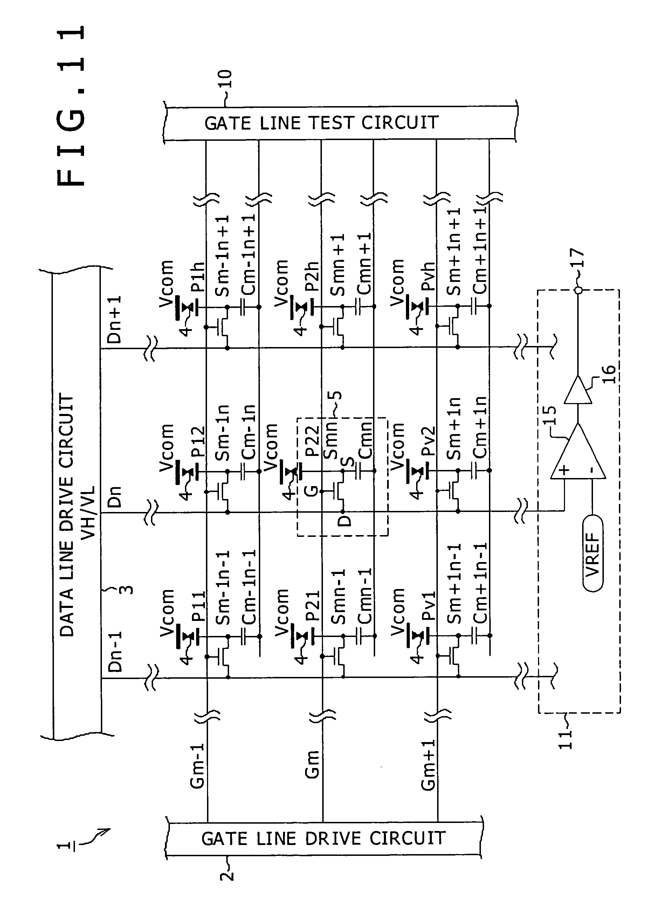

In the data line test circuit 11 shown in Fig. 11, switch circuits Sw (n) and Sw (n + 1) are formed corresponding to the data lines Dn and Dn + 1, respectively. The switch circuits Sw (n) and Sw (n + 1) each implement switch over so that either of terminals t2 and t3 is alternatively coupled to a terminal t1.

These switch circuits Sw (n) and Sw (n + 1) may be constructed of a semiconductor switch formed on the semiconductor substrate for example.

In order to control the switch over of these switch circuits Sw (n) and Sw (n + 1), as shown in the drawing, lines for switch-over control are routed and coupled to switch input terminals Tm1 and Tm2 provided in the data line test circuit 11 for example. Furthermore, e.g. an external test device not shown in the drawing is coupled to the switch input terminals Tm1 and Tm2, and control signals for switch over are output from the test device to the switch input terminals Tm1 and Tm2. In this case, the switching states of the switch circuits Sw (n) and Sw (n + 1) are in line with each other as is also apparent from the following description. Therefore, the switch input terminals Tm1 and Tm2 may be integrated into one common terminal, and a control signal may be input to the common switch input terminal to thereby allow switch over of the switch circuits Sw (n) and Sw (n + 1) in line with each other.

The terminal t1 of the switch circuits Sw (n) and Sw (n + 1) is coupled to the end of the data lines Dn and Dn + 1, respectively. In addition, the terminals t2 of the switch circuits Sw (n) and Sw (n + 1) are coupled to the AND gate 12, and the terminals t3 thereof are coupled to the EXOR gate 14.

Both the outputs of the AND gate 12 and the EXOR gate 14 are coupled to the test output terminal 17.

In such a configuration, when testing disconnection, initially a test device or the like outputs to the switch input terminals Tm1 and Tm2 a control signal for coupling the terminals t1 with the terminals t2 as described above for example. Thus, both the ends of the data lines Dn and Dn + 1 are coupled to the AND gate 12. Subsequently, test drive signals that both are at the H level are output to the data lines Dn and Dn + 1 as described referring to Figs. 4A to 4D, and the output from the AND gate 12 obtained through the test output terminal 17 is monitored, which allows a determination as to the presence of disconnection defects.

Furthermore, when testing short-circuit, the detection device or the like outputs to the switch input terminals Tm1 and Tm2 a control signal for coupling the terminals t1 to the terminals t2, to thereby couple both the ends of the data lines Dn and Dn + 1 with the EXOR gate 14.

Subsequently, as described referring to Figs. 8A to 8L, applied to the data lines Dn and Dn + 1 are test drive signals with a combination pattern of (H, L) levels, and test drive signals with a combination pattern of (L, H) levels. Thus, a short-circuit test is carried out based on the levels of the operation results by the EXOR gate 14 (outputs from the test output terminal 17) obtained upon the application of the test drive signals with the respective combination patterns.

It should be noted that the configurations shown in Figs. 9 and 10 can also be applied as a configuration capable of testing both disconnection and short-circuit in gate lines in an exactly similar way.

Moreover, the above configurations described with the respective drawings as the first embodiment are only examples of a configuration for testing disconnection and short-circuit about the data lines Dn and Dn + 1 in the interconnect layout structure described with Fig. 2.

Therefore, depending on an actual interconnect layout structure, a configuration may be employed in which plural logical operation circuits for performing specific logical operation are connected to each other with a required coupling form, and determinations as to defects are made based on definitive operation results output via these circuits, even if the configuration tests only disconnection or short-circuit for example.

In the above-described examples, the number of inputs to the logic circuit (the AND gate 12, the NOR gate 13 and the EXOR gate 14) is two. This is because data lines as a test target are the neighboring data lines Dn and Dn + 1 since the examples are premised on the interconnect layout structure shown in Fig. 2. Therefore, depending on an actual interconnect layout structure, a configuration in which the number of inputs to a logic circuit is three or more may be employed.

In any case, the present embodiment can test the presence of line defects in data lines and gate lines based on detection outputs as a logical value. In addition, circuits for tests can be formed in the data line test circuit 11 and the gate line test circuit 10 as an assembly of logical operation circuits according to the interconnect layout structure. Therefore, even when plural logical operation circuits are connected, the circuit configuration does not become complicated but can remain to be a simple configuration.

Furthermore, as one test procedure for the above-described configurations as the first embodiment, sequential application of the test drive signals to each of groups of a requisite number of data lines (or gate lines) offers the following advantage for example. Specifically, this way allows identification of positions of line defects, i.e., a determination as to which data line (or gate line) or which area involves line defects. This positional identification can be utilized in the subsequent analyses about the defects.

On the contrary, a test procedure is also available in which all data lines (or gate lines) (or a large number of data lines (or gate lines) in a certain area) are simultaneously driven by test drive signals. In this case, the requisite level of the H / L levels should be assigned to each of all the data lines (or gate lines) according to the line position for example, which is then followed by application of test drive signals. When thus driving a large number of data lines (or gate lines) simultaneously, these data lines (or gate lines) can be collectively and simultaneously tested as to the presence of line defects therein. Therefore, the test time period can be shortened.

When thus implementing a collective test, ends of the data lines (or gate lines) may be integrated into one end, followed by being coupled to a logical operation circuit in the data line test circuit 11 (or the gate line test circuit 10) according to need.

For example, also in conventional techniques, it is attempted to test defects while integrating ends of the data lines (or gate lines) into one end as described above. However, the conventional techniques detect analog current levels, and level changes due to defects are small. Therefore, it is very difficult to determine the presence of defects based on current levels. In contrast, the present embodiment obtains detection outputs as logical values, which allows determinations based on binary values. That is, determining the presence of defects is much facilitated compared with conventional techniques.

Moreover, another test procedure is also available in which test drive signals are applied to data lines to drive them in order to test the presence of line defects in the data lines as described above, and simultaneously one or more gate lines as a test target are driven. It should be noted, for reconfirmation, that the gate line drive circuit 2 is used to drive gate lines.

This test procedure allows a test as to the presence of defects in pixel capacitors. Specifically, when pixel capacitors involve no defect, pixel switches (e.g., ·· Smn - 1, Smn, Smn + 1 ··) coupled to a driven gate line (e.g., Gm) are turned on, and charges are normally accumulated in pixel capacitors (e.g., ·· Cmn - 1, Cmn, Cmn + 1 ··) coupled to the pixel switches, which results in arising of the potential according to the data writing state. In contrast, if short-circuit exists as a defect in the pixel capacitor, such a potential is not generated.

Depending on the presence of short-circuit in a pixel capacitor, a potential change arises also in the data line to which a test drive signal is applied. Specifically, the short-circuited pixel capacitor is drawn into a ground potential or source potential according to the interconnect layout structure of the pixel capacitor and the periphery thereof.

For example, the following situation is possible. Specifically, when only data lines are driven by test drive signals, a determination is made that the data lines involve no line defect. However, when test drive signals of the requisite level of the H / L levels are applied to the data lines simultaneously with driving gate lines, the output of logical operation (output from a logical operation circuit) obtained from the data lines has a logical value different from that obtained from non-defective data lines. Totally considering these test results allow a determination as to the presence of a defect such as short-circuit in pixel capacitors.

Fig. 11 illustrates a circuit configuration example of a liquid crystal display as a first example of a second embodiment of the present invention.

The basic configuration of the liquid crystal display 1 shown in the drawing is the same as that of each example of the first embodiment shown in Fig. 1. However, for testing the presence of line defects in data lines, the data line test circuit 11 has a different configuration as follows.

Referring to Fig. 11, the data line test circuit 11 includes a comparator 15.

The non-inverting input of the comparator 15 is coupled to an end of the data line Dn. Input to the inverting input is a reference level VREF. The output from the comparator 15 is amplified by a buffer amplifier 16, followed by being output from the test output terminal 17. Note that the outputs of the logic circuits shown in Figs. 3, 5 and 7 in the first embodiment may be coupled to a buffer amplifier.

In this manner, the second embodiment includes a comparator circuit that compares the potential arising at an end of a data line with the reference level VREF of a predetermined certain potential. Although this drawing illustrates only a comparator circuit for testing the data line Dn, comparator circuit or the like may be provided corresponding to other data lines for example in an actual configuration.

When testing the presence of a line defect in the data line Dn with this circuit configuration, test drive signals VH / VL having different levels are applied for example. Such a level is assigned to the test drive signal VH as to generate a potential higher than the reference level VREF at the end of the data line Dn (input of the comparator 15) when the data line Dn is in the normal state without line defects (disconnection and short-circuit). In contrast, such a level is assigned to the test drive signal VH as to generate a potential lower than the reference level VREF at the end of the data line Dn (input of the comparator 15) when the data line Dn is in the normal state.

Therefore, if the data line Dn involves no line defect, the output from the comparator 15 (output from the test output terminal 17) is at the H level when the test drive signal VH is applied, and is at the L level when the test drive signal VL is applied.

In contrast, if the data line Dn involves a line defect, the end of the data line Dn, coupled to the comparator 15, is drawn into a certain potential level. Accordingly, a state arises in which the potential at the end of the data line Dn is lower than the reference level VREF although the test drive signal VH is applied, or in which it is higher than the reference level VREF although the test drive signal VL is applied.

As a result, a state is obtained in which the output from the comparator 15 (output from the test output terminal 17) is at the L level although the test drive signal VH is applied, or in which it is at the H level although the test drive signal VL is applied. This state allows a determination that a line defect exists in the data line Dn. In addition, if the potential at the end of the data line Dn when the data line Dn involves disconnection and that when it involves short-circuit are apparent from the interconnect layout structure of the data line Dn, the combination of the level (logical value) of a test drive signal and the logical value of the output from the comparator 15 allows a determination as to which of disconnection and short-circuit exits as a line defect.

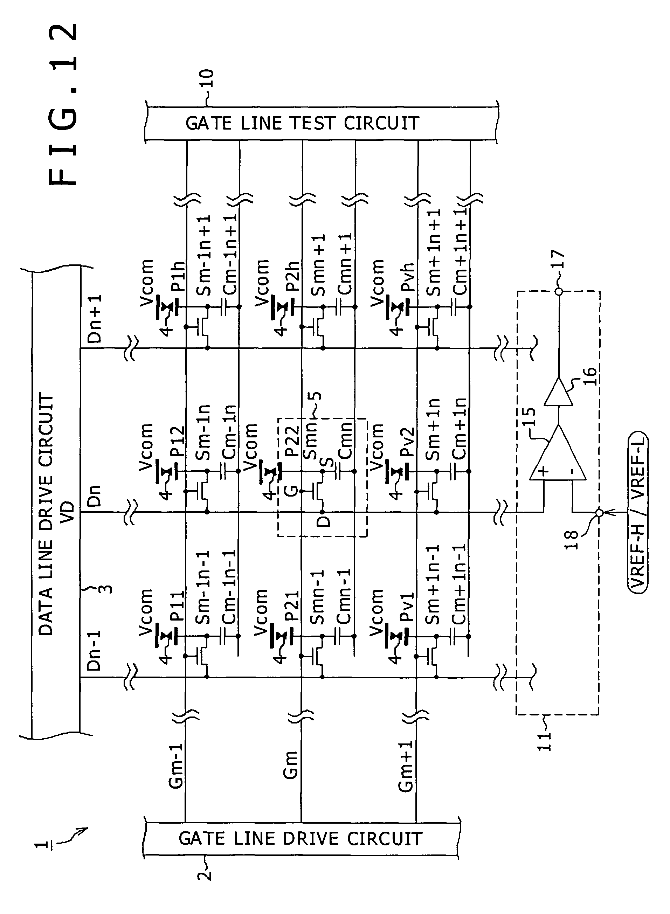

Fig. 12 illustrates a second example of the second embodiment. The same parts in Fig. 12 as those in Fig. 11 are given the same numerals and will not be described below.

The data line test circuit 11 shown in this drawing also includes a comparator circuit in which the comparator 15 is coupled to the buffer amplifier 16 in a similar way to that of Fig. 11. In this case, however, a test drive signal VD of a certain fixed level is used as a test drive signal applied from the data line drive circuit 3 to the data line Dn. On the other hand, a reference level input to the inverting input of the comparator 15 is switched between levels VREF-H and VREF-L. The reference level VREF-H is a potential higher than the potential that arises in a non-defective data line upon application of the test drive signal VD thereto. The reference level VREF-L is a potential lower than the potential that arises in a non-defective data line upon application of the test drive signal VD thereto.

In the configuration of Fig. 11, the level of a test drive signal is switched while fixing the reference level VREF input to the comparator 15. In contrast, in the configuration of Fig. 12, the reference level to the comparator 15 is switched while fixing the level of a test drive signal.

Referring to Fig. 12, switch over between the reference levels VREF-H and VREF-L is carried out by outputting voltage levels as the reference levels VREF-H and VREF-L from the external of the data line test circuit 11 via an input terminal 18. In this case, for example, a test device not shown in the drawing is coupled to the input terminal 18, and voltages are output from the test device to the input terminal 18. Furthermore, another configuration is also available. Specifically, a level switch circuit may be formed so that the switch over itself between the reference levels VREF-H and VREF-L can be carried out inside the data line test circuit 11 by utilizing e.g. a power supply, and level switch operation by the level switch circuit may be implemented with a switch control signal from an external test device for example.

In order to carry out a test with this configuration, the reference levels VREF-H / VREF-L are switched while applying the test drive signal VD to the data line Dn, and the output from the comparator 15 (output from the test output terminal 17) is observed.

If the data line Dn involves no line defect, the potential corresponding to the level of the test drive signal VD arises at the end of the data line Dn. Therefore, the output from the comparator 15 is at the L level when the reference level VREF-H is input thereto, and is at the H level when the reference level VREF-H is input thereto.

In contrast, if a line defect exists in the data line Dn and thus the potential at the end of the data line Dn changes to a certain potential that does not correspond to the level of the test drive signal VD, the output from the comparator 15 is at the H level although the reference level VREF-H is input thereto, or is at the L level although the reference level VREF-L is input thereto. Such an output from the comparator 15 indicates the presence of a line defect.

Also in this configuration of Fig. 12, if the potentials at the end of the data line Dn corresponding to disconnection and short-circuit are determined depending on the interconnect layout structure of the data line Dn, the combination of the level (logical value) of a test drive signal and the logical value of the output from the comparator 15 allows a determination as to which of disconnection and short-circuit exits as a line defect.

As described above, also in the second example of the second embodiment shown in Figs. 11 and 12, detection outputs from the data line test circuit 11 are obtained as logical values of the H / L levels. Thus, the test operation can be simplified and the test time period can be shortened similarly to the above-described first embodiment. In addition, also in this case, since the circuit configuration as a comparator (comparator circuit) is employed, the circuit configuration that should be formed in the data line test circuit 11 does not become complicated but remains to be a simple configuration.

Moreover, also in the second embodiment, by applying the circuit configuration and the operation of applying test drive signals based on the above description to the gate line test circuit 10 and the gate line drive circuit 2, a test as to the presence of line defects can be carried out also for gate lines in a similar way to that for data lines described above.

Furthermore, also in the second example of the second embodiment, similarly to each example of the first embodiment, the positions of line defects can be identified by sequentially applying test drive signals to each group of a requisite number of data lines (or gate lines) as a test target and thus driving the lines. This positional identification offers advantages for analyses and so on. Alternatively, a test can be carried out by simultaneously driving all data lines (or gate lines) (or a large number of data lines (or gate lines) in a certain area) with test drive signals.

Moreover, a test procedure for driving data lines and gate lines simultaneously to thereby test the presence of defects in pixel capacitors is also available similarly to the first embodiment.

In addition, one of advantages common to the first and second embodiments is that a test can be carried out in either of steps before enclosing a liquid crystal and after the enclosing.

This advantage provides flexibility as to timing of a test step, which can enhance the manufacturing efficiency. In particular, since a test can be carried out for a semiconductor substrate in which a liquid crystal has not been enclosed yet, a situation can be avoided in which operations of enclosing a liquid crystal and assembling are implemented for defective products. This advantage also enhances the manufacturing efficiency, and eliminates wasteful consumption of the liquid crystal, which leads to effective reduction of the manufacturing costs.

Furthermore, the present invention can also be applied to a test as to the presence of defects in so-called bit lines and word lines in a memory element for example.

### Industrial Applicability

According to the present invention, as described above, determination results of a test as to defects in data lines or pixel switch control lines for example can be obtained according to detection outputs as digital values. That is, determinations are made not only based on changes of an analog current level, of which changes are subtle, but also based on binary values of 0 and 1 (H and L). Therefore, influences of measurement errors can be eliminated almost completely. Thus, more accurate determination results are obtained than ever before, and in step with this, the test time period can be shortened, which enhances the efficiency of test operation.

## Claims

1. A test method for a semiconductor substrate in which pixel cell drive circuits each including a pixel switch and a pixel capacitor that is coupled to the pixel switch and holds pixel data are arranged in a matrix corresponding to intersections between data lines and pixel switch control lines, the method comprising:
a test drive step of selecting two or more of the data lines or two or more of the pixel switch control lines according to an interconnect layout structure on the semiconductor substrate and/or a test item, and applying to each of the selected data lines or each of the selected pixel switch control lines a test drive signal that has a level corresponding to a required logical value, the level being set according to operation expression of logical operation executed in a logical operation step; and
a logical operation step of inputting as a logical value an output of a potential arising in each of the selected two or more data lines or each of the selected two or more pixel switch control lines, and executing logical operation in accordance with operation expression determined according to the layout structure and/or the test item.

2. A semiconductor device comprising, on a semiconductor substrate:
an image display area in which pixel cell drive circuits each including a pixel switch and a pixel capacitor that is coupled to the pixel switch and holds pixel data are arranged in a matrix corresponding to intersections between data lines and pixel switch control lines;
drive means for applying a test drive signal that has a level corresponding to a required logical value to each of two or more of the data lines or each of two or more of the pixel switch control lines, the level being set according to operation expression of logical operation executed by logical operation means, the two or more data lines or the two or more pixel switch control lines being selected according to an interconnect layout structure on the semiconductor substrate and/or a test item; and
logical operation means for inputting as a logical value, outputs of potentials that arise, due to the application of the test drive signal, in the two or more data lines or the two or more pixel switch control lines, and executing logical operation in accordance with operation expression determined according to the layout structure and/or the test item so as to output a logical operation result.

3. A display comprising:
a semiconductor substrate;
a counter substrate having a common electrode that is disposed to face the semiconductor substrate; and
a liquid crystal layer disposed between the semiconductor substrate and the counter substrate, wherein the semiconductor substrate includes:
an image display area in which pixel cell drive circuits each including a pixel switch and a pixel capacitor that is coupled to the pixel switch and holds pixel data are arranged in a matrix corresponding to intersections between data lines and pixel switch control lines;
drive means for applying a test drive signal that has a level corresponding to a required logical value to each of two or more of the data lines or each of two or more of the pixel switch control lines, the level being set according to operation expression of logical operation executed by logical operation means, the two or more data lines or the two or more pixel switch control lines being selected according to an interconnect layout structure on the semiconductor substrate and/or a test item; and
logical operation means for inputting as a logical value, outputs of potentials that arise, due to the application of the test drive signal, in the two or more data lines or the two or more pixel switch control lines, and executing logical operation in accordance with operation expression determined based on the layout structure and/or the test item so as to output a logical operation result.

4. A test method for a semiconductor substrate in which pixel cell drive circuits each including a pixel switch and a pixel capacitor that is coupled to the pixel switch and holds pixel data are arranged in a matrix corresponding to intersections between data lines and pixel switch control lines, the method comprising:
a drive step of driving the data line or the pixel switch control line as a test target with a test drive signal that has a required voltage level; and
a comparison step of comparing an output level of a potential that arises in the data line or the pixel switch control line driven by the test drive signal, with a reference level to which a certain level is assigned, and outputting a comparison result as a logical value.

5. A semiconductor device comprising, on a semiconductor substrate:
an image display area in which pixel cell drive circuits each including a pixel switch and a pixel capacitor that is coupled to the pixel switch and holds pixel data are arranged in a matrix corresponding to intersections between data lines and pixel switch control lines;
drive means for driving the data line or the pixel switch control line as a test target with a test drive signal that has a required voltage level; and
comparison means for comparing an output level of a potential that arises in the data line or the pixel switch control line driven by the test drive signal, with a reference level to which a certain level is assigned, and outputting a comparison result as a logical value.

6. A display comprising:
a semiconductor substrate;
a counter substrate having a common electrode that is disposed to face the semiconductor substrate; and
a liquid crystal layer disposed between the semiconductor substrate and the counter substrate, wherein the semiconductor substrate includes:
drive means for driving the data line or the pixel switch control line as a test target with a test drive signal that has a required voltage level; and
comparison means for comparing an output level of a potential that arises in the data line or the pixel switch control line driven by the test drive signal, with a reference level to which a certain level is assigned, and outputting a comparison result as a logical value.
